(19) **Europäisches Patentamt**

**European Patent Office**

**Office européen des brevets**

(11) Veröffentlichungsnummer : **0 287 517 B1**

(12) **EUROPÄISCHE PATENTSCHRIFT**

(45) Veröffentlichungstag der Patentschrift :
15.01.92 Patentblatt 92/03

(51) Int. Cl.⁵ : **H01B 7/18**

(21) Anmeldenummer : **88810235.7**

(22) Anmeldetag : **12.04.88**

(54) **Nachrichten-oder Steuerkabel mit Tragelement.**

(30) Priorität : **13.04.87 CH 1423/87**

(43) Veröffentlichungstag der Anmeldung :
**19.10.88 Patentblatt 88/42**

(45) Bekanntmachung des Hinweises auf die
Patenterteilung :
**15.01.92 Patentblatt 92/03**

(84) Benannte Vertragsstaaten :
**AT BE CH DE ES FR GB GR IT LI LU NL SE**

(56) Entgegenhaltungen :
**DE-A- 3 330 096**
**US-A- 4 097 686**
**US-A- 4 317 000**

(73) Patentinhaber : **Schweizerische Isola-Werke**
**CH-4226 Breitenbach (CH)**

(72) Erfinder : **Heim, Peter, Dr.**
**Schulgartenweg 5**
**CH-4226 Breitenbach (CH)**
Erfinder : **Altermatt, Ernst**
**Talstrasse 14**
**CH-4208 Nunningen (CH)**

(74) Vertreter : **Becher, Pauline, Dr. et al**
**A. Braun, Braun, Héritier, Eschmann AG**
**Holbeinstrasse 36-38**
**CH-4051 Basel (CH)**

Jouve, 18, rue Saint-Denis, 75001 PARIS

## Beschreibung

Bisher war es üblich, die Bruchkraft von Kabeln, hauptsächlich von Kabeln mit kleinen Querschnitten, und somit deren mechanische Eigenschaften durch Einlegen von Verstärkungsfasern, z.B. in Form von Fäden, Filamenten oder Garnen, zu verbessern. Dieses Vorgehen hat den Nachteil, dass einzelne Verstärkungselemente bei der Weiterverarbeitung, z.B. beim Spleissen der Kabel, ausfransen, so dass nicht bei allen Herstellungsverfahren eine kontinuierliche Fabrikation der Kabel möglich ist.

Es wurde nun gefunden, dass die Bruchkraft von solchen Verstärkungselementen erhöht werden kann, indem man sie mit einer Lösung eines Polymerblends aus Polyurethanharz und Phenoxyharz benetzt und die Harze bei erhöhter Temperatur vernetzt.

Die US-A-4317000 offenbart ein Kabel ohne Verdrehungstendenz mit einer zentralen Kabelseele, um die schraubenlinienförmig eine innere Schicht von Tragelementen aus Aramidfasern angeordnet ist, die durch eine abriebbeständige Sperrofolienschicht von einer gegenläufig schraubenlinienförmig darüber angeordneten äusseren Schicht getrennt ist, die abwechselnd Tragelemente aus Aramidfasern und nicht tragende zusätzliche Elemente aus Nylonfasern aufweist. Die Tragelemente der inneren Schicht können mit einem Polyurethanharz imprägniert sein, um ihre Haltbarkeit unter Biegebeanspruchung zu verbessern (Spalte 2, Zeilen 55 und 56). Dieses Dokument legt in keiner Weise die Lehre nahe, dass die Bruchkraft, das heisst, die unmittelbar vor der Trennung der Probe beim Zugversuch gemessene Kraft $P_B$, von solchen Tragelementen erhöht werden kann, indem man sie mit einer Lösung eines Polymerblends aus Polyurethanharz und Phenoxyharz benetzt und die Harze bei erhöhter Temperatur miteinander vernetzt.

In der DE-A-3330096 wird ein Kabel mit die Kabelseele umgebenden Tragelementen vorgeschlagen, bei dem die Tragelemente aus einem flachen, bandartigen Bündel mit jeweils einer Vielzahl von Fasern aus aromatischem Polyamid oder Glas bestehen, die von aus aromatischem Polyamid oder Polyethylen bestehenden Schmelzkleberschichten umgeben sind. Damit wird insbesondere bezweckt, die Längswasserdichtheit zu gewährleisten. Auch dieses Dokument enthält keinerlei Hinweise darauf, dass die Bruchkraft solcher Tragelemente durch Benetzen der Faserbündel mit einer Lösung eines Polymerblends aus Polyurethanharz und Phenoxyharz und Vernetzen der Harze miteinander bei erhöhter Temperatur erhöht werden kann.

Die Erfindung bezieht sich somit auf ein Nachrichten- oder Steuerkabel mit einem Tragelement aus hochmolekularen Verstärkungsfasern mit einem Elastizitätsmodul grösser als 100 GPa, die mittels eines hochmolekularen Harzes fest miteinander verbunden sind, dadurch gekennzeichnet, dass das hochmolekulare Harz ein vernetztes Polymerblend aus Polyurethanharz und Phenoxyharz ist.

Die Verstärkungsfasern können längenbegrenzte Fasergebilde (Spinnfasern) oder praktisch endlose Gebilde (Filamente) sein und in Form von parallelen und/oder verdrillten längenbegrenzten Fasern oder Filamenten, Garnen oder Geflechten vorliegen. Sie können superfeste Kunststoff-Filamente (Hochmodulfilamente), vorzugsweise aus aromatischen Polyamiden (Aramidfilamente), wie beispielsweise die Markenprodukte Kevlar und Arenka, oder anorganische Fasern, vorzugsweise aus Kohlenstoff, wie beispielsweise Graphitfasern oder C-Whiskers, sein.

Die folgende Tabelle zeigt verschiedene Eigenschaften von Fasern mit einem Elastizitätsmodul grösser als 100 GPa :

| Faser/ Handelsname | Dichte in $g/cm^3$ | Zugfestigkeit in MPa | E-Modul in GPa | Spez.E-Modul in $N*cm*g^{-1}$ |
|---|---|---|---|---|
| Kevlar 49 | 1,45 | 2760 | 138 | 951 |
| Arenka HM | 1,45 | 2700 | 125 | 862 |
| Graphit A-S[1] | 1,75 | 2820 | 208 | 1189 |
| Graphit HT-S[1] | 1,77 | 2820 | 234-253 | 1322-1429 |
| Graphit HM-S[1] | 1,91 | 2340 | 345-375 | 1806-1963 |
| Graphit UHMS[1] | 1,96 | 1860 | 485-517 | 2474-2638 |
| Bor[2] | 2,65 | 3410 | 386 | 1457 |
| Beryllium | 1,83 | 350 | 320 | 1749 |
| Stahl,verstreckt | 7,75 | 2600 | 210 | 270 |
| Whiskers | | | | |
| Si | - | - | 159 | - |
| C | 1,9 | 20000 | 1034 | 5442 |
| Fe | 7,8 | 13000 | 200 | 256 |
| Zirkon | - | - | 427 | - |

1) A = High-strain/low modulus,

HT = high-tensile,

HM = high-modulus,

UHM = ultra-high-modulus,

S = surface treated.

2) mit Wolfram-Seele.

Das Polyurethanharz kann Amid- und/oder Imidgruppen enthalten. Es ist vorzugsweise linear oder verzweigt. Das Phenoxyharz hat vorzugsweise ein Molekulargewicht grösser als 30000.

Das unvernetzte Polyurethanharz kann z.B. in bekannter Weise aus folgenden Ausgangsmaterialien hergestellt werden :

A.    262,5 Gew.-Teile Triethylenglycol

130,5 Gew.-Teile Tris-(hydroxyethyl)-isocyanurat

112,5 Gew.-Teile Glykokoll

288 Gew.-Teile Trimellithsäureanhydrid

250 Gew.-Teile p,p'-Diphenylmethandiisocyanat

Dieses Polyurethanharz enthält Imidgruppen

B.    240 Gew.-Teile N-Methylpyrrolidon

150 Gew.-Teile Triethylenglycol

250 Gew.-Teile p,p'-Diphenylmethandiisocyanat

C.    62 Gew.-Teile Ethylenglycol

210 Gew.-Teile Trimethylhexamethylendiisocyanat

D.    106 Gew.-Teile Diethylenglycol
210 Gew.-Teile Trimethylhexamethylendiisocyanat
130 Gew.-Teile N-Methylpyrrolidon

Als unvernetzte Phenoxyharze kommen z.B. die Markenprodukte Epikote 1401, Epikote 1402, Eponol 55-L-32 und Eponol 53-L-32 von Shell und das Markenprodukt Phenoxy Resin PKHH (Union Carbide) in Betracht.

Das Polymerblend enthält zweckmässig 10 bis 80 Gew.-% Polyurethanharz und 90 bis 20 Gew.-% Phenoxyharz, vorzugsweise 30 bis 60 Gew.-% Polyurethanharz und 70 biz 40 Gew.-% Phenoxyharz.

Bei der Herstellung und der Anwendung der Harze dürfen keine Phenole als Blockierungs- oder Lösungsmittel verwendet werden. Für die Aufbringung der Polymerblends auf die Verstärkungsfasern oder -filamente eignen sich tief- und mittelsiedende Lösungsmittel, wie Glycolether, Glycolester, aromatische Kohlenwasserstoffe, auch Alkohole, Dimethylformamid oder Methylenchlorid oder Gemische davon. Durch das hochmolekulare, vernetzte Harz wird die Dehnbarkeit des Verstärkungselements verringert und die Bruchkraft erhöht.

Um die Bruchkraft des erfindungsgemässen Tragelementes den jeweiligen Anforderungen anzupassen, können mehrere Verstärkungsfäden oder -filamente und/oder mehrere Verstärkungsgarne parallel gelegt, mit einer Lösung der Ausgangsmaterialien für das hochmolekulare vernetzte Harzin einem geeigneten Lösungsmittel imprägniert und thermisch vernetzt werden, so dass sie zu einem einheitlichen Tragelement vereinigt werden. Man kann auch einzelne Verstärkungsfäden oder -filamente und/oder einzelne Verstärkungsgarne zu einem Bündel verseilen und dieses Bündel wie beschrieben imprägnieren und vernetzen. Die Verseilung kann in S-Drehung, Z-Drehung oder SZ-Drehung und/oder als Geflecht ausgeführt werden.

Bei dünnen Leitern oder Kabeln ist es ausserdem möglich, die Leiter oder Kabel mit Verstärkungsfäden zu umseilen oder zu verseilen oder zu umflechten und das dabei erhaltene Gebilde in der oben beschriebenen Weise zu imprägnieren und zu vernetzen.

Ferner können auch Tragelemente miteinander oder mit Leitern oder Kabeln verflochten werden.

Die erfindungsgemässen Tragelemente können vor allem für die mechanische Verstärkung von Nachrichten-, Fernsteuer- und Lichtwellenleiterkabeln sowie Spezialkabeln eingesetzt werden.

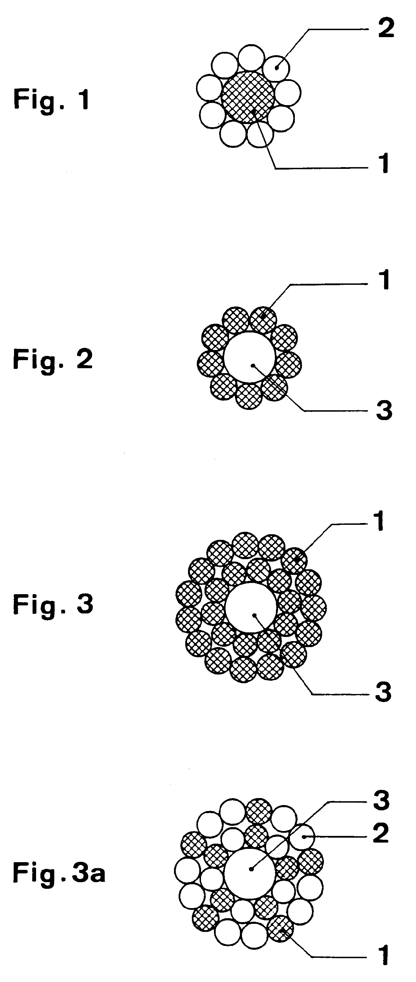

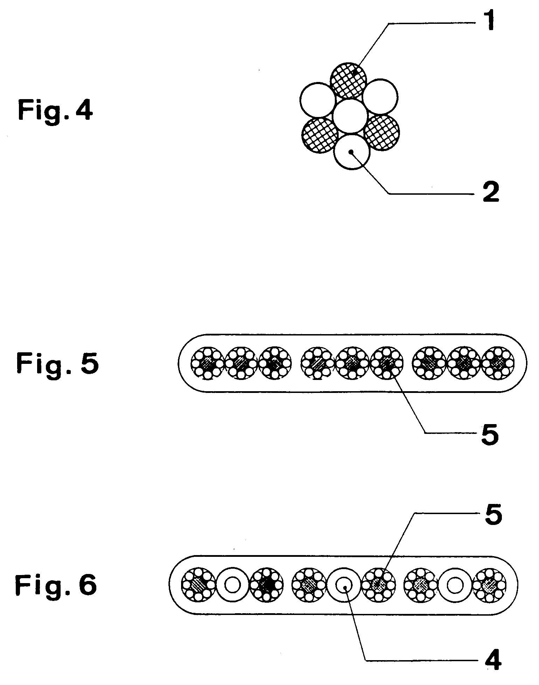

Die Tragelemente können auf verschiedene Weise in die Kabel eingebaut werden. Die Figuren 1 bis 3, 3a und 4 bis 6 zeigen mehrere Ausführungsformen von erfindungsgemässen Kabeln.

Fig. 1 zeigt ein Tragelement 1, das als Zentralelement mit mehreren Leitern 2 verseilt ist.

Fig. 2 zeigt einen Leiter oder ein Kabel 3 als Zentralelement, das mit einer Schicht aus mehreren Tragelementen 1 klassisch oder in SZ-Drehung verseilt ist.

Fig. 3 zeigt ebenfalls einen Leiter oder ein Kabel 3 als Zentralelement, das mit mehreren Schichten aus mehreren Tragelementen 1 klassisch oder gegenläufig oder in SZ-Drehung verseilt ist.

Fig. 3a zeigt gleichfalls einen Leiter oder ein Kabel 3 als Zentralelement, das mit mehreren Schichten aus mehreren Tragelementen 1 und mehreren Leitern 2 klassisch oder gegenläufig oder in SZ-Drehung verseilt ist.

Fig. 4 zeigt mehrere blanke oder isolierte Leiter 2, die mit mehreren Tragelementen 1 verseilt sind.

Fig. 5 zeigt ein Flachkabel, bei dem mehrere Elemente 5, die nach einer der Figuren 1 bis 4 ausgebildet sein können, in einen Kunststoffmantel, vorzugsweise eine flammhemmende Isolation, z.B. aus PVC, eingebettet sind.

Fig. 6 zeigt ein anderes Flachkabel, bei dem mehrere Elemente 5 und mehrere Lichtwellenleiter 4 in einen Kunststoffmantel, vorzugsweise eine flammhemmende Isolation, z.B. aus PVC, eingebettet sind.

## Patentansprüche

1. Nachrichten- oder Steuerkabel mit einem Tragelement (1) aus hochmolekularen Verstärkungsfasern mit einem Elastizitätsmodul grösser als 100GPa, die mittels eines hochmolekularen Harzes fest miteinander verbunden sind, dadurch gekennzeichnet, dass das hochmolekulare Harz ein vernetztes Polymerblend aus Polyurethanharz und Phenoxyharz ist.

2. Nachrichten- oder Steuerkabel nach Anspruch 1, dadurch gekennzeichnet, dass die Verstärkungsfasern in Form von parallelen und/oder verdrillten längenbegrenzten Fasern oder Filamenten, Garnen oder Geflechten vorliegen.

3. Nachrichten- oder Steuerkabel nach Anspruch 1 oder 2, dadurch gekennzeichnet, dass die Verstärkungsfasern superfeste Kunststoff-Filamente, vorzugsweise aus aromatischen Polyamiden, oder anorganische Fasern, vorzugsweise C-Fasern, sind.

4. Nachrichten- oder Steuerkabel nach einem der Ansprüche 1 bis 3, dadurch gekennzeichnet, dass das Polyurethanharz Amid- und/oder Imidgruppen enthält.

5. Nachrichten- oder Steuerkabel nach einem der Ansprüche 1 bis 4, dadurch gekennzeichnet, dass das Polyurethanharz linear oder verzweigt ist.

6. Nachrichten- oder Steuerkabel nach einem der Ansprüche 1 bis 5, dadurch gekennzeichnet, dass das Phenoxyharz ein Molekulargewicht grösser als 30000 hat.

7. Nachrichten- oder Steuerkabel nach einem der Ansprüche 1 bis 6, dadurch gekennzeichnet, dass das Polymerblend 10 bis 80 Gew.-%, vorzugsweise 30 bis 60 Gew.-%, Polyurethanharz und als Rest Phenoxyharz enthält.

## Claims

1. A communication or control cable with a supporting element (1) comprising high-molecular reinforcing fibres with an elasticity modulus greater than 100GPa and which are firmly connected to each other by means of a high-molecular resin, characterised in that the high-molecular resin is a cross-linked polymer blend comprising polyurethane resin and phenoxy resin.

2. A communication or control cable according to claim 1, characterised in that the reinforcing fibres are in the form of parallel and/or twisted, longitudinally limited fibres or filaments, threads or meshes.

3. A communication or control cable according to claim 1 or 2, characterised in that the reinforcing fibres are super-resistant synthetic material filaments, preferably comprising aromatic polyamides or inorganic fibres, preferably C-fibres.

4. A communication or control cable according to any one of claims 1 to 3, characterised in that the polyurethane resin contains amide and/or imide groups.

5. A communication or control cable according to any one of claims 1 to 4, characterised in that the polyurethane resin is linear or branched.

6. A communication or control cable according to any one of claims 1 to 5, characterised in that the phenoxy resin has a molecular weight of greater than 30000.

7. A communication or control cable according to any one of claims 1 to 6, characterised in that the polymer blend contains 10 to 80 wt.%, preferably 30 to 60 wt.% polyurethane resin, and phenoxy resin as the remainder.

## Revendications

1. Câble de télécommunication ou de commande comprenant un élément porteur (1) formé de fibres de renforcement de haut poids moléculaire ayant un module d'élasticité supérieur à 100 GPa, qui sont unies fermement les unes aux autres par une résine de haut poids moléculaire, caractérisé en ce que la résine de haut poids moléculaire est un mélange de polymères réticulé formé de résine de polyuréthanne et de résine phénoxyde.

2. Câble de télécommunication ou de commande suivant la revendication 1, caractérisé en ce que les fibres de renforcement se présentent sous la forme de fibres de longueur limitée ou de filaments, de filés ou de tresses parallèles et/ou torsadés.

3. Câble de télécommunication ou de commande suivant la revendication 1 ou 2, caractérisé en ce que les fibres de renforcement sont des filaments de matière plastique superrésistants, de préférence formés de polyamides aromatiques, ou des fibres inorganiques, de préférence des fibres de C.

4. Câble de télécommunication ou de commande suivant l'une quelconque des revendications 1 à 3, caractérisé en ce que la résine de polyuréthanne contient des radicaux amide et/ou imide.

5. Câble de télécommunication ou de commande suivant l'une quelconque des revendications 1 à 4, caractérisé en ce que la résine de polyuréthanne est linéaire ou ramifiée.

6. Câble de télécommunication ou de commande suivant l'une quelconque des revendications 1 à 5, caractérisé en ce que la résine phénoxyde a un poids moléculaire supérieur à 30.000.

7. Câble de télécommunication ou de commande suivant l'une quelconque des revendications 1 à 6, caractérisé en ce que le mélange de polymères contient 10 à 80% en poids, de préférence 30 à 60% en poids, de résine de polyuréthanne et de la résine phénoxyde pour le reste.

Fig. 1

Fig. 2

Fig. 3

Fig. 3a

Fig. 4

Fig. 5

Fig. 6